(19)

**Europäisches Patentamt**
**European Patent Office**
**Office européen des brevets**

(11) **EP 1 759 046 B1**

(12) **EUROPEAN PATENT SPECIFICATION**

(45) Date of publication and mention
of the grant of the patent:
**10.08.2016 Bulletin 2016/32**

(21) Application number: **05765011.1**

(22) Date of filing: **24.06.2005**

(51) Int Cl.:
*D06F 37/30* *(2006.01)*    *H02K 3/28* *(2006.01)*
*H02K 3/38* *(2006.01)*    *H02K 11/00* *(2016.01)*
*H02K 17/08* *(2006.01)*    *H02K 17/30* *(2006.01)*
*H02K 1/30* *(2006.01)*    *H02K 1/32* *(2006.01)*
*H02K 9/06* *(2006.01)*    *H02K 15/03* *(2006.01)*

(86) International application number:
**PCT/KR2005/001971**

(87) International publication number:
**WO 2006/001655 (05.01.2006 Gazette 2006/01)**

(54) **A MOTOR FOR A WASHING MACHINE**

EIN MOTOR FÜR EINE WASCHMASCHINE

UN MOTEUR POUR UNE MACHINE A LAVER

(84) Designated Contracting States:
**AT BE BG CH CY CZ DE DK EE ES FI FR GB GR
HU IE IS IT LI LT LU MC NL PL PT RO SE SI SK TR**

(30) Priority: **24.06.2004   KR 2004047711
24.06.2004   KR 2004047710**

(43) Date of publication of application:
**07.03.2007   Bulletin 2007/10**

(73) Proprietor: **LG Electronics Inc.
Youngdungpo-gu
Seoul 150-721 (KR)**

(72) Inventor: **PARK, Yong Suck,
Ilsindaedong Freevillage
Gyeongsangnam-do 641120 (KR)**

(74) Representative: **Vossius & Partner
Patentanwälte Rechtsanwälte mbB
Siebertstrasse 3
81675 München (DE)**

(56) References cited:
**WO-A2-2004/069019    GB-A- 1 395 742
JP-A- 2003 079 080    KR-A- 20030 050 734
KR-A- 20040 036 197    US-A- 4 761 576**

# Description

## [Technical Field]

The present invention relates to an outer rotor type induction motor for a washing machine, and more particularly, to an outer rotor type induction motor of an improved structure for a washing machine, for improving a performance, securing safety, and preventing damage to a stator coil.

## [Background Art]

In general, the washing machine washes laundry through steps of washing, rinsing, spinning, drying, and so on to remove dirt from clothes, and beddings (hereafter called as laundry) held in a washing tub by using actions of water and detergent.

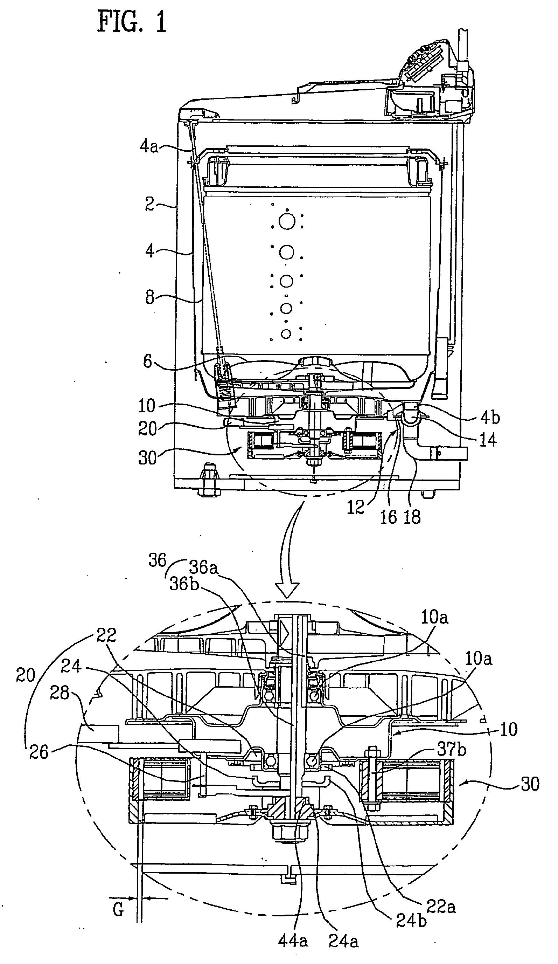

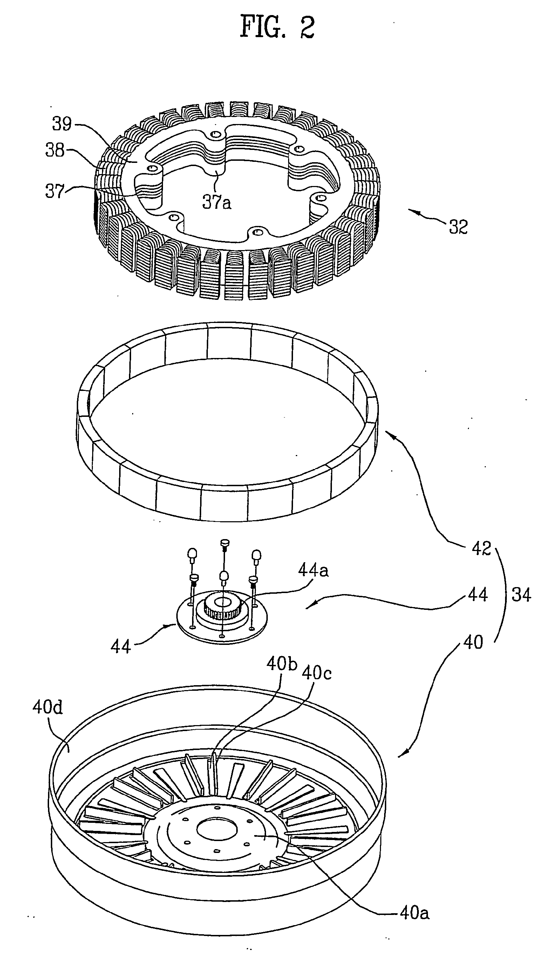

FIG. 1 illustrates a section of a washing machine having a related art motor applied thereto, and FIG. 2 illustrates an exploded perspective view of a related art motor for a washing machine.

Referring to FIG. 1, the related art washing machine is provided with a cabinet 2 forming an exterior thereof, an outer tub 4 suspended in the cabinet 2 with supporting members 4a, having a space for holding washing water, an inner tub 8 rotatably mounted in the outer tub 4, having a pulsator 6 mounted on a bottom, and water holes in an sidewall, a motor 30 under the outer tub 4 for providing driving force for rotating the pulsator 6 and the inner tub 8, a bearing housing 10 fixedly secured to a center of an underside of the outer tub 4, for rotatably supporting a rotating shaft 36 of the motor 30, and a clutch mechanism 20 between the bearing housing 10 and the motor 30 for connecting/disconnecting driving force transmitted to the pulsator 6 and the inner tub 8.

The outer tub 4 has a drain unit 12 at a lower portion for discharging washing water held in the outer tub 4 to an outside of the washing machine.

The drain unit 12 is provided with a drain valve 14 in communication with a drain hole 4b in the outer tub 4, a drain motor 16 at one side of a lower portion of the outer tub, and a drain hose 18 for guiding washing water drained through the drain valve 14 to an outside of the washing machine.

Under the bearing housing 10 fixedly secured to the center of underside of the outer tub 4, there is a stator fixed secured thereto. There is a rotating shaft 36 of the motor 30 passed through an upper surface and a lower surface of the bearing housing 10, rotatably supported with bearings 10a at an upper side, and a lower side of an inside of the bearing housing 10.

The motor 30 is of an Outer Rotor Type BLDC Motor (Brushless DC Motor), enabling to rotate the pulsator 6, or the inner tub 8 at various speeds as the BLDC motor 30 controls power supplied thereto to control a speed of the motor 30.

The rotating shaft 36 of the motor 30 is provided with a hollow spinning shaft 36a having an upper end connected to the inner tub 8, and a washing shaft 36b rotatably mounted inside of the hollow spinning shaft 36a, having a lower end connected to the motor 30, and an upper end connected to the pulsator 6.

In the meantime, the clutch mechanism 20 is provided with a coupling stopper 22 fixedly secured to the underside of the bearing housing 10, a clutch coupling 24 coupled to a lower end of the spinning shaft 36a with a spline for enabling axial direction sliding, a clutch lever 26 having one side connected to the clutch coupling 24, for making the clutch coupling 24 to move in an axial direction to engage with the motor 30 or the coupling stopper 22, and a clutch motor 28 at the other side of the clutch lever 26 for operating the clutch lever 26.

The clutch coupling 24 has a first clutch gear 24a on an underside surface for engagement with a second clutch gear 44a on a rotor bushing 44 (see FIG. 2) of the motor 30, and a first locking gear 24b on an upper surface for engagement with a second locking gear 22a on the coupling stopper 22.

Accordingly, if the clutch lever 26 makes the clutch coupling 24 to move down, the first clutch gear 24a and the second clutch gear 44a are engaged, to transmit power from the motor 30 to the spinning shaft 36a, and if the clutch lever 26 makes the clutch coupling 24 to move up, the first locking gear 24b and the second locking gear 22a are engaged, to make power transmission from the motor 30 to the spinning shaft 36a impossible.

In above washing machine, if a DC power is applied to the motor 30, and the clutch mechanism 20 makes the clutch coupling 24 to engage with the coupling stopper 22, the power is transmitted only from the motor 30 to the pulsator 6 through the washing shaft 36b, and by controlling a speed of the motor 30, washing and rinsing of the laundry is performed by the pulsator 6.

If the DC power is applied to the motor 30, and the clutch mechanism 20 makes the clutch coupling 24 to engage with the motor 30, the power is transmitted from the motor 30 both to the pulsator 6 and the inner tub 8 at the same time through the washing shaft 36b and the spinning shaft 36a, and by driving the motor 30 at a high speed, both the pulsator 6 and the inner tub 8 run at a high speed, to extract water from the laundry.

In the meantime, referring to FIG. 2, the related art motor is provided with the stator 32 fixedly secured to the underside of the bearing housing 10, and a rotor 34 rotatably mounted to surround an outer side of the stator 32 so as to be rotatable by electro-magnetic force acting between the stator 32 and the rotor 34.

The stator 32 is provided with an annular core 37 having a stack of a plurality of steel pieces, and a coil 38 wound on the core 37 and connected to an external power source.

The core 37 has insulators 39 on an upper side and a lower side, and a plurality of fastening portions 37a formed along, and projected inward from, an inside circumference. Each of the fasting portions 37a has a fastening hole, for fastening to the underside of the bearing housing with a fastening bolt 37b.

The rotor 34 is provided with a rotor frame 40 to surround an outside circumference and an underside of the stator 32, a rotor magnet 42 mounted on an inside circumference of the rotor frame 40 so as to be rotatable by electro-magnetic force acting between the stator 32 and the rotor magnet 42, and a rotor bushing 44 at a center of a lower surface of the rotor frame 40, for fastening a lower end of the rotating shaft 36 thereto.

The rotor frame 40 of a cylindrical shape with an opened top is provided with a rotor magnet securing portion 40d on an inside surface for seating, and securing the rotor magnet 42, and a bushing securing portion 40a at a center of the lower surface for pass of the rotating shaft 36, and securing the rotor bushing 44 thereto.

On an outer side of the bushing securing portion 40a of the lower surface of the rotor frame 40, there are a plurality of lower air holes 40b and lower blades 40c arranged in a circumferential direction spaced from each other.

The lower blade 40c is on one side of the lower air hole 40b, and both the lower blade 40c and the lower air hole 40b are extended in a radial direction. Accordingly, when the rotor frame 40 rotates, air is blown into an inside of the motor 30 by the lower air holes 40b to cool the rotor 34 and the stator 32.

The rotor magnet 42 is a plurality of permanent magnets bonded to the rotor magnet securing portion 40d of the rotor frame 40 with adhesive opposite to the outside circumferential surface of the stator 32, to form a gap G (see FIG 1) between the rotor magnet 42 and the stator 32.

The rotor bushing 44 is provided with a bushing portion 44b for placing a lower end of the washing shaft 36b of the rotating shaft 36 therein, having the second clutch gear 44a on an outside circumferential surface, and a flange portion 44c around the bushing portion 44b for securing to the bushing securing portion 40a of the rotor frame 40.

The bushing portion 44b is formed of a metal.

The flange portion 44c is a plastic injection molding for electric insulation between the bushing portion 44b and the rotor frame 40, and has fastening holes 44d in correspondence to the fastening holes in the bushing securing portion 40a, for fastening with fastening members 46.

However, because the insulators 39 are arranged on an upper surface and a lower surface of the core 37 on an inner side of the coil 38 except on a portion where the coil 38 is wound, the related art stator of a motor for a washing machine has the coil 38 exposed to an outside of the stator 32.

Consequently, there is hazards of electric shock from power applied to the coil 28, and damage to the coil 38 during transportation, assembly, and maintenance of the stator 32.

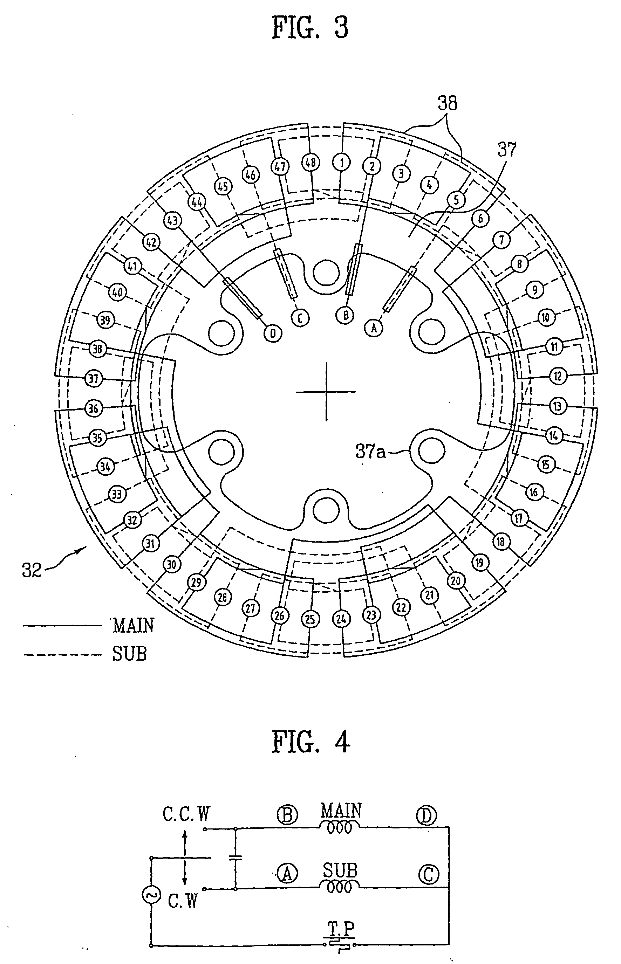

In the meantime, referring to FIGS. 3 and 4, in a related art motor for a washing machine, the coil 38 is wound along a circumference of the core 37 of the stator 32, and the coil 38 is provided with a main circuit for rotating the rotor 34 in a regular direction, and a sub-circuit for rotating the rotor 34 in a reverse direction. Each of the main circuit and the sub-circuit has single coil 38 which forms a serial circuit with 8-poles.

In the meantime, during the motor 30 is driven, if the rotor 34 is out of a regular position, leading a gap 'G' between the stator 32 and the rotor 34 non-uniform, to cause a non-uniform electromagnetic force between the stator 32 and the rotor 34, there is a magnetic attraction force acting between the stator 32 and the rotor 34 caused by the non-uniform gap between the stator 32 and the rotor 34.

According to this, the motor 30 is involved in reduction of rotation torque, occurrence of vibration, and interference between the rotor 34 and the stator 32, caused by the magnetic attraction force.

In the meantime, outer rotor type induction motors also have above problems.

KR 2004 0036197 A relates to a driving device of a fully automated washing machine to cool the heat generated from a stator assembly by forming a plurality of fan members at a top end ring of a rotor assembly. The stator assembly is formed with a core and a coil part and insulators.

JP 2003 079080 A relates to a stator comprising a circular stator core having a plurality of magnetic pole teeth arranged and extending in the radial direction at a distance therebetween in the circumferential direction, a coil wound round each magnetic pole tooth and a cylindrical insulative member disposed in between the magnetic pole teeth.

KR 2003 0050734 A relates to an electric motor to obtain a high output as compared with the same size and weight by installing a plurality of rotators at one stator.

[Disclosure]

[Technical Problem]

An object of the present invention is to provide a stator of a motor for a washing machine, in which an insulator structure is changed so as not to expose a coil to an outside of the stator for preventing accidents of electric shock caused by negligence of safety from occurring in advance, to enhance safety of the motor, and damage to the coil.

Another object of the present invention is to provide a motor for a washing machine, which enables to reduce magnetic attraction force and prevent interference between the stator and the rotor caused by the non-uniform gap between the stator and the rotor.

## [Technical Solution]

In an aspect of the present invention for achieving the object of the present invention, a motor for a washing machine according to independent claim 1 is provided.

## [Advantageous Effects]

The mounting of the upper insulator and the lower insulator on the upper surface and the lower surface of the core of the stator respectively, with an outer edge of the lower insulator extended in a downward concave parabola shape to surround the lower coil portion arranged on an underside of the core, so as not to expose the coil to an outside of the stator, permits accidents of electric shock caused by negligence of safety from occurring in advance, and to cut off infiltration of washing water into the coil, to improve safety of the motor.

The non-exposure of the coil to an outside of the motor permits to prevent damage to the coil during transportation, assembly, and maintenance of the stator.

The winding of four coils on the core connected in parallel to form 8 polar four parallel circuits of the main parallel circuit and the sub-parallel circuit on the stator permits to reduce magnetic attraction force caused by non-uniform gap between the stator and the rotor, thereby preventing interference between the stator and the rotor.

The reduction of the magnetic attraction force reduces vibration during driving the motor, and prevents drop of efficiency of the motor, to improve reliability of the motor.

The prevention of interference between the stator and the rotor permits to prevent abnormal wear and damage to the motor, to extend a lifetime of the motor, and improve safety of the motor.

## [Description of Drawings]

FIG. 1 illustrates a section of a washing machine having a related art motor applied thereto;
FIG. 2 illustrates an exploded perspective view of a related art motor for a washing machine;
FIG. 3 illustrates a wiring diagram of a coil of the stator in FIG. 2;
FIG. 4 illustrates a circuit diagram of the wiring in FIG. 3;
FIG. 5 illustrates a section of a washing machine having a motor in accordance with a preferred embodiment of the present invention applied thereto;
FIG. 6 illustrates a perspective view showing key parts of FIG. 5;
FIG 7 illustrates a section showing key parts of FIG. 5;
FIG. 8 illustrates a section across an A-A line in FIG.

6;
FIG. 9 illustrates an exploded perspective view of a motor for a washing machine in accordance with a preferred embodiment of the present invention;
FIG. 10 illustrates a bottom view of the stator in FIG 9;
FIG. 11 illustrates a section across a line B-B in FIG. 10;
FIG. 12 illustrates a wiring diagram of the coil in the stator in FIG. 9;
FIG. 13 illustrates a wiring diagram of FIG 12; and
FIG. 14 illustrates a reference diagram for explaining magnetic attraction force caused by non-uniform gap between a stator and a rotor.

## [Best Mode]

Embodiments of the present invention will be described with reference to the attached drawings.

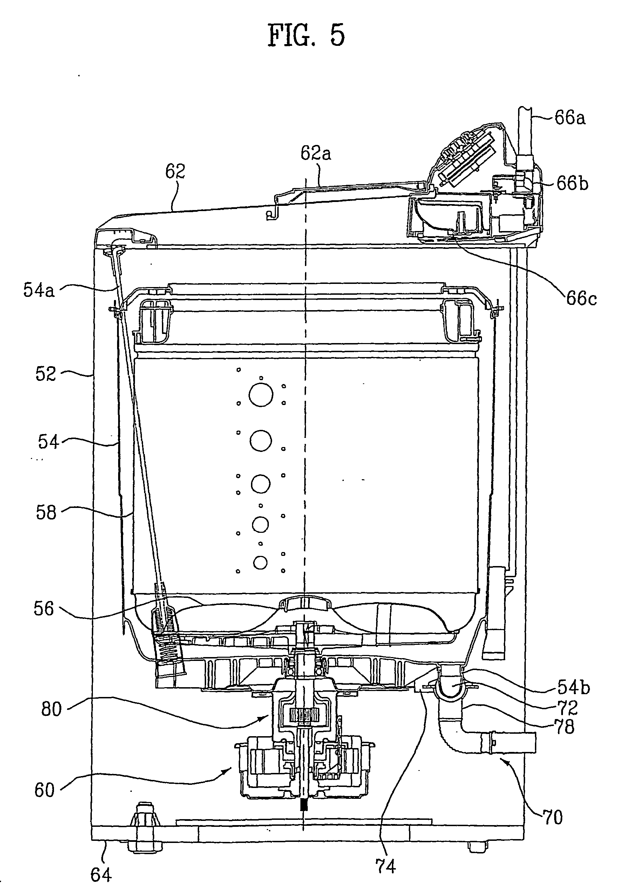

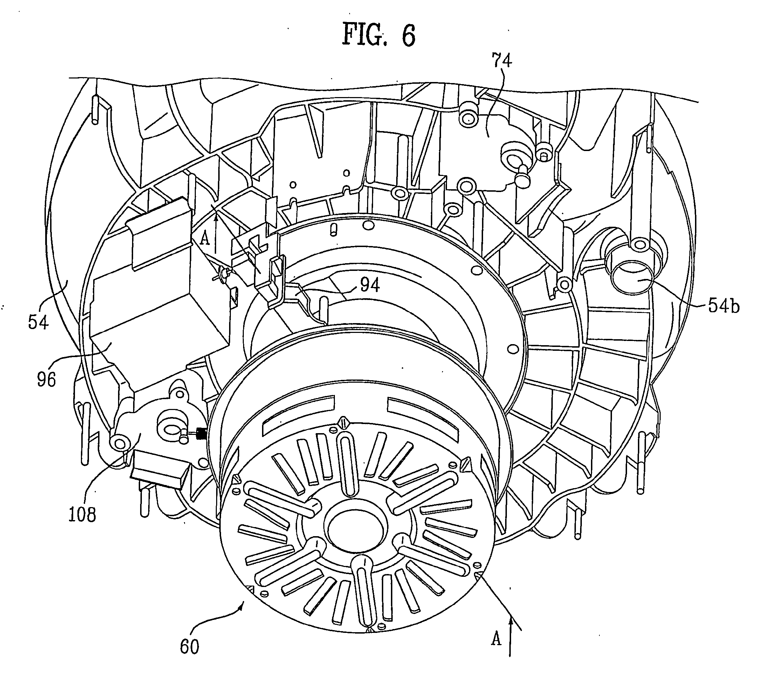

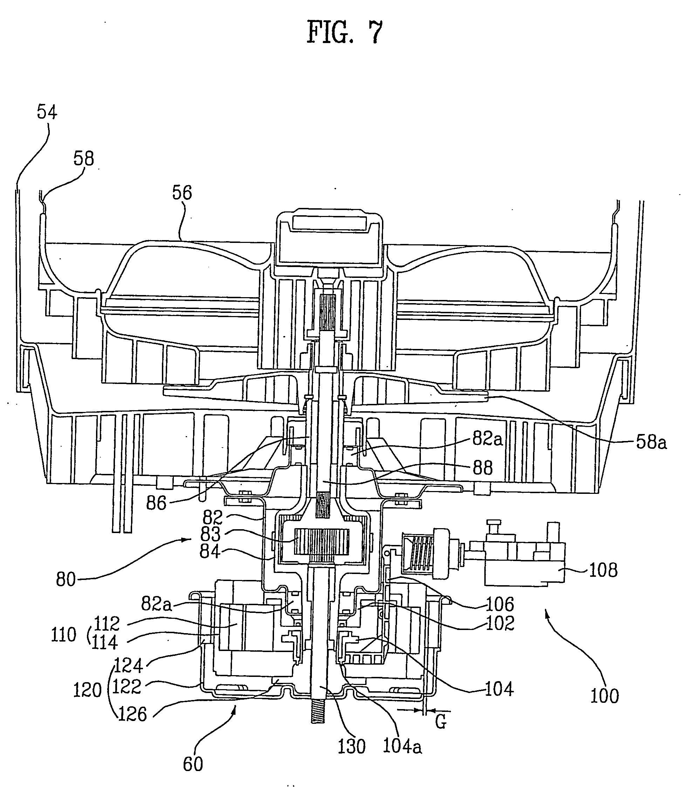

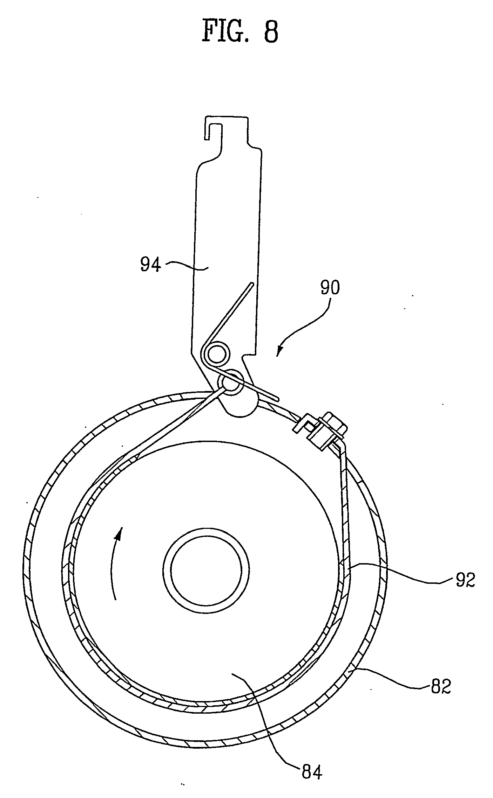

FIG. 5 illustrates a section of a washing machine having a motor in accordance with a preferred embodiment of the present invention applied thereto, FIGS. 6 and 7 illustrate a perspective view and a section of key parts of FIG. 5, respectively, and FIG. 8 illustrates a section across an A-A line in FIG. 6.

Referring to FIGS. 5 to 8, the washing machine includes a cabinet 52 forming an exterior thereof, an outer tub 54 suspended in the cabinet 52 with supporting members 54a, having a space therein for holding washing water, an inner tub 58 rotatably mounted in the outer tub 54, having a pulsator 56 mounted on a bottom, and water holes in an sidewall, a motor 60 under the outer tub 54 for providing driving force for rotating the pulsator 56 and the inner tub 58, and a power transmission unit 80 between the motor 60 and the outer tub 54 for connecting/disconnecting driving force transmitted to the pulsator 56 and the inner tub 58 selectively.

On the top of the cabinet 52, there is a top cover 62 having a laundry opening for introducing/taking out laundry to/from the washing machine, and under the cabinet 52, there is a base 64 having supporting legs provided thereto for supporting the washing machine. On the top cover 62, there is a lid 62a rotatably mounted for opening/closing the laundry opening, and at one side of the top cover 62, there is a water supply unit 66 for supplying water into the washing machine in supplying water.

The water supply unit 66 includes a water supply hose 66a for supplying washing water from an outside of the washing machine, and a water supply valve 66b for cutting off washing water supplied to the water supply hose 66a, and, in a water supply flow passage, there is a detergent box 66c such that detergent is washed away toward the outer tub 54 by water passed through the water supply valve 66b.

The outer tub 54 has a drain unit 70 at a lower portion for discharging washing water held in the outer tub 54 to an outside of the washing machine.

The drain unit 70 includes a drain valve 72 having one end in communication with a drain hole 54b in the outer tub 54, a drain motor 74 on an underside of the outer tub 54 for controlling opening/closing of the drain valve 72, and a drain hose 78 in communication with the other end of the drain valve 72 for guiding washing water drained through the drain valve 72 to an outside of the washing machine.

The drain hole 54b is formed in a bottom of the outer tub 54 so as to be in communication with an inside of the outer tub 54, and the drain motor 74 is coupled to the drain valve 72 with separate connecting members.

The motor 60 is an Induction Motor of an Outer Rotor Type to which an AC power is supplied, and has a speed reduced by the power transmission unit 80, appropriately.

In the meantime, the power transmission unit 80 includes a housing 82 mounted to a center of an underside of the outer tub 54, having an underside with a stator of the motor 60 fixedly secured thereto, a drum 84 rotatably mounted in the housing 82, having a planetary gear 83 therein for reducing a speed of the motor 60, a hollow spin shaft 86 having a lower end press fit in the drum 84, and an upper end connected to the inner tub 58, a washing shaft 88 rotatably mounted in the hollow spin shaft 86, having a lower end engaged with the planetary gear 83 and an upper end connected to the pulsator 56, a brake mechanism 90 mounted to the housing 82 for braking the power transmission unit 80, and a clutch mechanism 100 under the drum 84 for connecting/disconnecting power transmission between the motor 60 and the drum 84.

On an upper side and a lower side of the housing, there are bearings 82a for rotatably supporting the drum 84 and the spin shaft 86 respectively, and at a lower portion of an inside of the drum 84, there is a rotating shaft 130 of the motor 60 rotatably mounted thereon.

The rotating shaft 130 has an upper end engaged with the planetary gear 83 in the drum 84, and between the drum 84 and the rotating shaft 130, and between the spin shaft 86 and the washing shaft 88, there are oiless bearings, too.

The spin shaft 86 has an upper end connected to an inner tub hub 58a fixedly secured to a bottom of the inner tub 58, and a lower end press fit in an upper portion of the drum 84. The spin shaft 86 mounted thus is to transmit power of the motor 60 from the drum 84 transmitted thereto by the clutch mechanism 100 to the inner tub 58.

Referring to FIG. 6, the brake mechanism 90 includes a brake band 92 having one end secured to the housing 82, and arranged to surround an outside circumference of the drum 84, a brake lever 94 having the other end of the brake band 92 connected thereto with a hinge, and rotatably mounted to the housing 82, and a brake motor 96 (see FIG. 6) connected to the brake lever 94 so that the brake band 92 tightens an outside circumference of the drum 84.

The brake motor 96 (see FIG. 6) is mounted on an underside of the outer tub 54, for applying a force higher than a predetermined value to the brake lever 94 to forcibly stop the drum 84 by the brake band 92. Accordingly, it is required that the brake motor 96 has an adequate capacity so that the brake band 92 can secure an adequate braking power for braking the drum 84.

The clutch mechanism 100 includes a coupling stopper 102 fixedly secured to an underside of the housing 82, a clutch coupling 104 connected to a lower end of the drum 84 with a spline to be movable up/down, a clutch lever 106 rotatably mounted on the clutch stopper 102, having one end connected to the clutch coupling 104, and a clutch motor 108 connected to the other end of the clutch lever 106, for connecting/disconnecting power transmission between the clutch coupling 104 and the motor 60.

The clutch coupling 104 includes a first clutch gear 104a projected form a lower surface for engagement with a second clutch gear 166 on the motor 60, and connected to the drum 84 of the clutch mechanism 100 with a spline to be movable up/down.

The clutch lever 106 has one end connected to the clutch coupling 104, the other end connected to the clutch motor 108, and a middle of the one end and the other end rotatably connected to the coupling stopper 102 with a hinge.

The clutch motor 108 is mounted on an underside of the outer tub 54 for moving the clutch lever 106 such that the clutch coupling 104 moves up/down along a lower portion of the drum 84.

That is, when the clutch lever 106 is rotated by the clutch motor 108, the clutch coupling 104 is slid up/down along the lower portion of the drum 84 by the clutch lever so that the clutch coupling 104 is engaged with the motor 60 or the coupling stopper 102.

The operation of the washing machine of the present invention will be ) described.

Upon application of power to the washing machine to drive the motor 60, power is transmitted form the motor 60 to the power transmission unit 80 through the rotating shaft 130, and, as the pulsator 56 or the inner tub 58 is driven selectively by the power transmission unit 80, washing, rinsing, and spinning cycles are progressed.

In detail, in a case it is intended to operate only the pulsator 56 to perform the washing, and the rinsing cycles, the clutch coupling 104 of the power transmission unit 80 is moved up by the clutch motor 108 and the clutch lever 106 to decouple the motor 60 and the drum 84.

That is, if the clutch motor 108 moves the clutch lever 106 such that the clutch coupling 104 moves up along the lower portion of the drum 84, the first clutch gear 104a of the clutch coupling 104 is disengaged from the second clutch gear 166 of the motor 60, the clutch mechanism 100 can not transmit power from the motor 60 to the clutch coupling 104.

Accordingly, power is transmitted from the motor 60 only to the planetary gear 83 in the drum 84 through the rotating shaft 130, and, therefrom to the washing shaft 88 after a speed thereof is reduced by the planetary gear 83 appropriately, to perform washing or rinsing as the pulsator 56 is rotated by the washing shaft 88.

During washing or rinsing, the drain unit 70 discharges washing water used for washing or rinsing to an outside of the washing machine, and the water supply unit 66 supplied water to the washing machine.

That is, as the water supply valve 66b of the water supply unit 66 is opened/closed, water is supplied to the outer tub 54 of the washing machine through the water supply hose 66a, and as the drain valve 72 is opened/closed by the drain motor 74 of the drain unit 70, the washing water is drained from the outer tub 54 to an outside of the washing machine through the drain valve 72 and the drain hose 78.

Opposite to this, in a case both the pulsator 56 and the inner tub 58 are driven at the same time, to perform spinning to extract water from the laundry, the clutch coupling 104 is moved down by the motor 108 and the clutch lever 106, the power transmission unit 80 couples the motor 60 and the drum 84.

That is, if the clutch motor 108 moves the clutch lever 106 such that the clutch coupling 104 moves down along the lower portion of the drum 84, the first clutch gear 104a of the clutch coupling 104 is engaged with the second clutch gear 166, to enable power transmission from the motor 60 to the clutch coupling 104.

According to this, power is transmitted from the motor 60 to the planetary gear 83 in the drum 84 through the rotating shaft 130, and, at the same time with, to the drum 84 through the clutch coupling 104, the drum 84 and the rotating shaft 130 rotate at the same speed.

In this instance, since the drum 84 and the rotating shaft 130 rotate at the same speed together, a speed reducing function of the planetary gear 83 in the drum 84 is effective no more, such that the drum 84 and the rotating shaft 130 rotate at a high speed.

If the power is transmitted from the motor 60 to the drum 84 and the rotating ) shaft 130 at the same time thus, the rotating shaft 130 and the planetary gear 83 rotate the washing shaft 88, and the drum 84 rotates the spin shaft 86, such that the pulsator 56 and the inner tub 58 are rotated by the washing shaft 88 and the spin shaft 86.

In the meantime, if the lid 62a is opened by the user in the middle of spinning, the power transmission unit 80 brakes rotation of the drum 84 by means of the brake mechanism 90, to prevent accident from occurring by negligence of safety caused by spinning pulsator 56 and the inner tub 58.

That is, in the spinning when the pulsator 56 and the inner tub 58 rotate at a high speed, if the lid 62a is opened, the brake lever 94 is pulled by the brake motor 96 of the brake mechanism 90, to tighten the brake band 92 on the outside circumference of ) the drum 84, to stop rotation of the drum 84 by friction between the drum 84 and the brake band 92.

Thus, when rotation of the drum 84 is braked, rotation of the spin shaft 86 and the washing shaft 88 stop, to stop rotation of the inner tub 58 and the pulsator 56, accordingly.

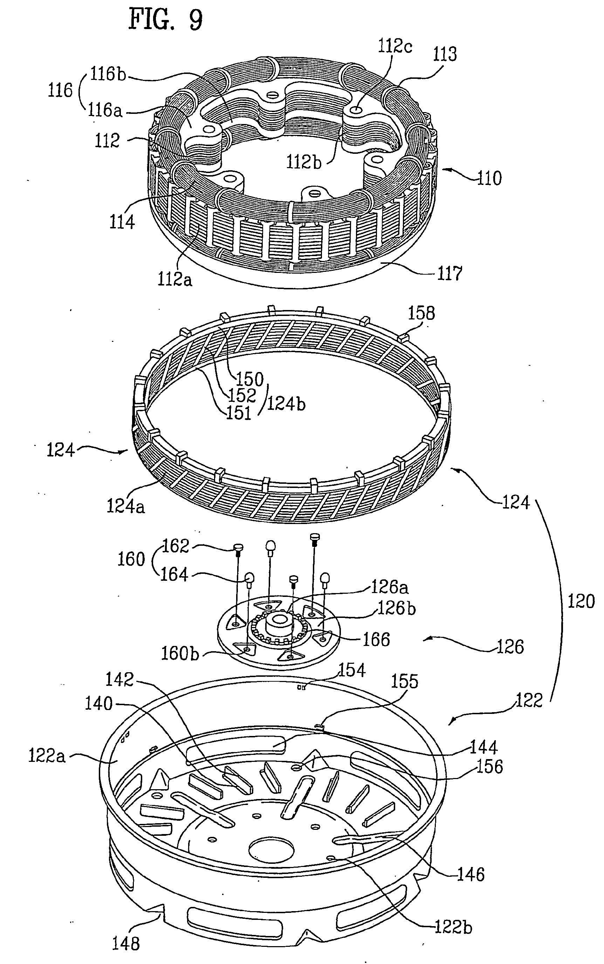

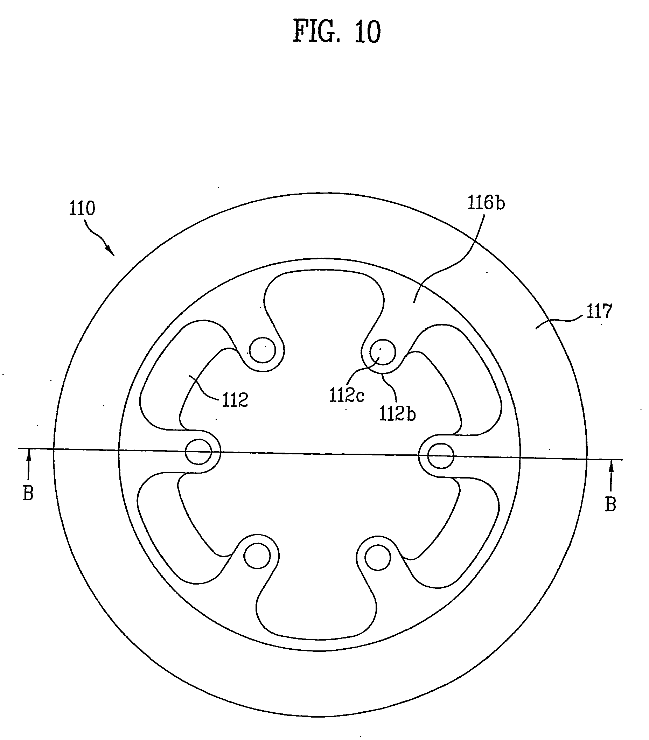

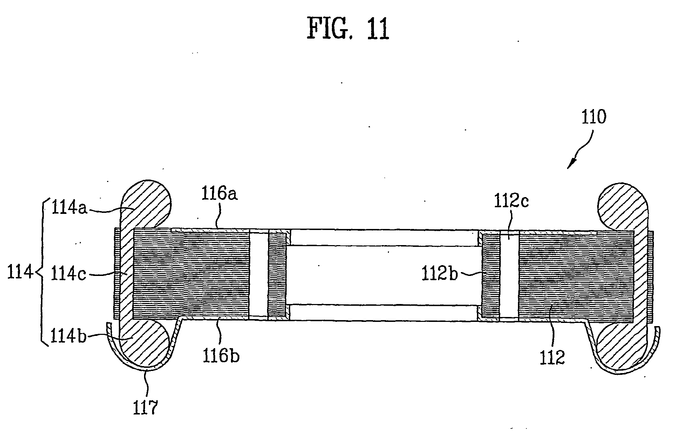

FIG. 9 illustrates an exploded perspective view of a motor for a washing machine in accordance with a preferred embodiment of the present invention, FIG. 10 illustrates a bottom view of the stator in FIG 9, and FIG 11 illustrates a section across a line B-B in FIG. 10.

Referring to FIGS. 7, and 9 to 11, the motor for a washing machine in accordance with a preferred embodiment of the present invention includes a stator 110 fixedly secured to an underside of housing 82 of a power transmission unit 80, a rotor 120 mounted to surround an outside of the stator 110, for being rotatable by electromagnetic force generated with respect to the stator 110, and a rotating shaft 130 rotatably arranged in a drum 84, having a lower end fixedly secured to the rotor 120, an upper end engaged with a planetary gear 83 of the power transmission unit 80.

The stator 110 includes an annular core 112 having a stack of a plurality of steel pieces, a coil 114 wound on the core 112 and connected to an AC power source, and insulators 116 on an upper side and a lower side of the core 112, having one side extended to surround the coil 114, for performing an insulating function.

The core 112 includes a plurality of Ts 112a each projected outwardly in a radial direction from an outside circumference for winding the coil 114 thereon, and a plurality of fastening portions 112b each projected from an inside circumference for fastening to the housing 82 of the power transmission unit 80 with a fastening bolt (not shown). The plurality of Ts 112a are formed at regular intervals on, and along the outside circumference of the core 112, and the coil 114 is placed between the Ts.

The plurality of fastening portions 112b are formed on an inside circumference of the core 112 at regular intervals, and each of the fasting portions 112b has a fastening hole 112c on one side of inside thereof for fastening with a fastening bolt.

Of the plurality of Ts 112a, as one side of a coil 114 is inserted between two of the Ts 112a, and the other side of the coil 114 is inserted between other two of the Ts 112a, a plurality of the coils 114 are wound along a circumference of the core 112, and are connected in parallel.

As upper portions and lower portions of the plurality of coils 114 are bound along circumferences of the upper surface and the lower surface of the core 112 with binding members 113, a diameter of the stator 110 is reduced, on the whole.

That is, the coil 114 includes an upper coil portion 114a on an upper edge of the core 112, a lower coil portion 114b on an lower edge of the core 112, and a connection coil 114c placed, and connected between the plurality of Ts 112a.

According to this, as major portion of the coil 114 is arranged on the upper surface and the lower surface, and a projected length of the Ts 112a is reduced compared to the related art, a diameter of the stator 110 is reduced.

In the meantime, the insulator 116 includes an upper insulator 116a mounted on an upper surface of the core 112, and a lower insulator 116b mounted on an underside of the core 112 having an outer edge extended to surround the lower coil portion 114b.

The upper insulator 116a between the power transmission unit 80 and the core 112 prevents power conduction from the stator 110 to the power transmission unit 80.

The lower insulator 116b has the outer edge extended toward Ts 112a of the 5core 112 with a downward concave parabola shape to surround the lower coil portion 114b.

That is, the lower insulator 116b has the same diameter with the coil 114 on the whole, and a semicircular coil receiver 117 concave downwardly in a parabola shape at the outer edge along a circumference for receiving the lower coil portion 114b therein. 0According to this, the lower insulator 116b not only insulates an underside of the stator 110, but also protects the lower coil portion 114b from an external impact and infiltration of washing water.

Of course, alike the lower insulator 116b, the upper insulator 116a may also be formed to surround the upper coil portion 114a.

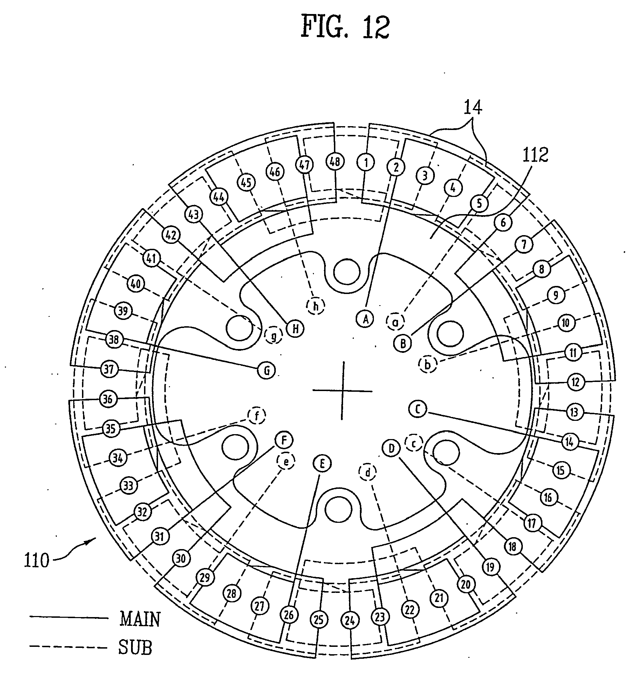

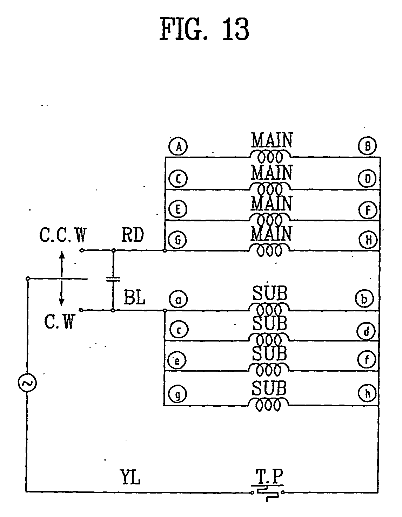

In the meantime, referring to FIGS. 12 and 13, there are four coils 114 wound on the Ts 112a along the circumference of the core 112 so as to be spaced the same distance, and connected in parallel, such that each of the coils 114 has two polarities.

That is, the four coils 114 form 8 polar 4 parallel circuits at the core 112.

In this instance, if a gap 'G' between the stator 110 and the rotor 120 is not uniform, though a magnetic attraction force 'F' acts between the stator 110 and the rotor 120 caused by the non-uniform gap 'G', the magnetic attraction force is reduced the more as a number of the parallel circuits of the coils 114 wound on the stator 110 and the rotor 120 increases the more.

In the meantime, in the parallel circuits of the coils 114, there are a main parallel circuit for rotating the rotor 120 in a regular direction, and a sub-parallel circuit for rotating the rotor 120 in a reverse direction, each with four coils 114 to form a four parallel circuit.

The sub-parallel circuit is arrange on an inside of the main parallel circuit such that there is a fixed angle of phase difference between the sub-parallel circuit and the main parallel circuit, wherein the four coils 114 of the main parallel circuit are wound in a circumferential direction on an inner side of the Ts 112a of the core 112, and the four coils 114 of the sub-parallel circuit are wound in a circumferential direction on an outer side of the Ts 112a of the core 112.

The rotor 120 includes a rotor frame 122 mounted to surround an outside circumferential surface and an underside surface of the stator 110, a rotor core 124 mounted on an inside circumferential surface of the rotor frame 122 so as to be rotatable by electro-magnetic force acting with respect to the stator 110, and a rotor bushing 44 at a center of a lower surface of the rotor frame 122, for fastening a lower end of the rotating shaft 130 thereto.

The rotor frame 122 of a cylindrical shape with an opened top in overall includes a rotor core securing portion 122a on an inside circumferential surface of a sidewall for seating, and securing the rotor core 124, and a bushing securing portion 122b at a center of the lower surface having first fastening holes 160a for securing the rotor bushing 126 thereto with fastening members 160.

In the meantime, the rotor frame 122 includes air holes and blades for preventing temperature rise of the motor 60 by blowing external air to the motor 60. That is, an internal temperature of the motor 60 rises due to electromagnetic heat loss of the motor 60 when the motor 60 is driven, cooling of the motor 60 is required so that performance of the motor 60 does not become poor.

Accordingly, at the lower surface of the rotor frame 122, there are lower air holes 140 and lower blades 142 for cooling a lower portion of the motor 60, and at a side surface of the rotor frame 122, there are side air holes 144 for improving the cooling performance of the lower air holes 140 and the lower blades 142.

The lower air holes 140 are arranged in circumferential direction of the rotor frame 122 between the inside circumferential surface of the rotor frame 122 and the bushing securing portion 122b.

Each of the lower blades 142 is projected upwardly from one side of each of the lower air holes 140 for blowing the external air through the lower air holes 140.

The lower air holes 140 and the lower blades 142 are extended in a direction tilted by an angle with respect to a radial direction of the rotor frame 122. Accordingly, since the lower air holes 140 and the lower blades 142 have lengths longer than a case the lower air holes 140 and the lower blades 142 are extended in the radial direction, an air flow rate by the lower air holes 140 and the lower blades 142 also increases when the rotor frame 122 rotates.

Particularly, though the air flow rate becomes the higher as the tilted angle of the lower air holes 140 and the lower blades 142 with respect to the radial direction of the rotor frame 122 become the greater, if the tilted angle exceeds 30°, the air flow rate is reduced on the contrary, when the air flow rate increases in a case the lower air holes 140 and the lower blades 142 are tilted in a direction opposite to a rotation direction of the rotor frame 122 rather than tilted in the rotation direction of the rotor frame 122.

Therefore, the lower air holes 140 and the lower blades 142 are formed tilted by a tilted angle 30° in a direction opposite to the rotation direction of the rotor frame 122 at the time of spinning, so that the cooling performance of the motor 60 becomes the maximum at the time of spinning when the heat generation at the motor 60 becomes the maximum.

The side air holes 144 are formed between the lower surface of the rotor frame 122 and the rotor core securing portion 122a at regular intervals along the side of the rotor frame 122 for discharging air drawn by the lower air holes 140 and the lower blades 142.

Since the side air holes 144 are at positions higher than the lower surface of the rotor frame 122, an air flow path between the lower air holes 140 and the side air holes 144 is formed on an upper side of the lower surface of the rotor frame 122. According to this, an area the air drawn through the lower air holes 140 is in contact with the lower portion of the motor 60 increases, to improve the cooling performance of the motor 60.

In the meantime, the rotor frame 122 has beads 146 and notches 148 for preventing distortion or deformation into an oval shape by centrifugal force.

There are a plurality of the beads 146, each of which is upward, or downward depression, formed in the lower surface of the rotor frame 122 extended in the radial direction of the rotor frame 122 at regular intervals of angle in a circumferential direction of the rotor frame 122.

The bead 146 has one end formed closest to the side of the rotor frame 122, and the other end formed in the same circumference of the first fastening holes 160a within the bushing securing portion 122b so that the other end overlaps with the rotor bushing 126.

The notches 148 are formed in an outside of a corner formed by a lower surface edge and a side surface edge of the rotor frame 122 punched inwardly at regular intervals of angles in a circumferential direction of the rotor frame 122.

The rotor core 124 includes an annular core portion 124a of a stack of a plurality of steel pieces, and a winding portion 124b on the core portion 124a for serving as a passage of an induction current. The winding portion 124b includes an upper end ring 150 and a lower end ring 151 at an upper end and a lower end of the core portion 124a, and lead lines 152 connected between the upper end ring 150 and the lower end ring 151.

The rotor core 124 is fixedly secured to the rotor core securing portion 122a of the rotor frame 122, for which the rotor core securing portion 122a has upper projections 154 and lower projections 155 for holding the rotor core 124 at an upper portion and a lower portion thereof.

The upper projections 154 are formed on an upper side of the rotor core 124 in a circumferential direction at regular intervals so that the rotor core 124 does not fall off toward the opened top side of the rotor frame 122 when the rotor 120 rotates. The upper projections 154 are formed at a fixed height of the rotor core securing portion 122a regardless of a size of the rotor core 124.

The lower projections 155 are formed on a lower side of the rotor core securing portion 122a in a circumferential direction at regular intervals so that the rotor core 124 is put, and supported thereon. The lower projections 155 are formed at heights varied with sizes of the rotor core 124. Accordingly, since a position of the lower projections 155 varies, various sizes of rotor cores 124 can be mounted on the rotor core securing portion 122a, selectively.

The upper projections 154 and the lower projections 155 are formed by punching an outside circumference of the rotor frame 122 inwardly such that the upper projections 154 and the lower projections 155 are projected inwardly.

In this instance, of course, adhesive may be applied between the rotor core 124 and the rotor core securing portion 122a for firmer fastening of the rotor core 124 to the rotor core securing portion 122a.

In the meantime, though the lower portion of the motor 60 is cooled by the lower air holes 140 and the lower blades 142 of the rotor frame 122, since the air blown by the lower air holes 140 and the lower blades 142 does not reach to the upper portion of the motor 60, but is discharged through the side air holes 144, the upper portion of the motor 60 is scarcely cooled by the lower air holes 140 and the lower blades 142.

Consequently, the plurality of blades 158 are projected upwardly from a top portion of the rotor core 124 for blowing external air to the upper portion of the motor 60 when the motor 60 is driven.

The upper blades 158 are injection molded as one body with the upper end ring 150 of the rotor core 124 at a top surface thereof extended in a radial direction of the rotor frame 122 along the top portion of the rotor core 124 at regular intervals.

In the meantime, the rotor core 124 has an inside diameter greater than an outside diameter of the stator 110 so that a fixed size of gap 'G' is formed between the rotor core 124 and the stator 110.

Though efficiency of the motor 60 becomes the higher as the gap 'G' is formed the smaller, the rotor 120 is liable to hit the stator 110 if the size of the gap 'G' is too small, design, fabrication, and maintenance of the motor is required so that there is always an optimal gap 'G' between the rotor core 124 and the stator 110.

Accordingly, the rotor frame 122 has gap verification holes 156 in the lower surface for noticing, and measuring the gap 'G'. There are a plurality of the gap verifying holes 156 along the gap 'G' between the stator 110 and the rotor core 124 in the lower surface of the rotor frame 122 at regular intervals.

The rotor bushing 126 includes a bushing portion 126a for securing a lower end of the rotating shaft 130, and a securing portion 126b around the bushing portion 126a for securing to the bushing securing portion 122b of the rotor frame 122.

The bushing portion 126a is formed of metal, for placing and securing one end of the rotating shaft 130 therein.

The securing portion 126b is a plastic injection molding for electric insulation between the bushing portion 126a and the rotor frame 122, and has second fastening holes 160b in correspondence to the first fastening holes 160a of the bushing securing portion 122b, for securing to the bushing securing portion 122b with fastening members 160.

The plurality of first fastening holes 160a and the plurality of second fastening holes 160b, respectively formed in the bushing securing portion 122b and the rotor bushing 126 in circumferential directions thereof in correspondence to each other, are fastened with bolts 162 and rivets 164 alternately in a circumferential direction.

The securing portion 126b has a second clutch gear 166 on an upper surface for engagement with the first clutch gear 104a of the clutch coupling 104.

The operation of the motor for a washing machine of the present invention will be described.

Upon application of AC power to the motor 60, a current flows to the coil 114 on the stator 110, to form a rotating magnetic field at the stator 110 and an induction current at the rotor core 124 of the rotor 120.

Owing to interaction between the rotating magnetic field and the induction current of the stator 110 and the rotor core 124, rotating force is generated to rotate the rotor 120, and rotation force of the rotor 120 is transmitted to the power transmission unit 80 through the rotating shaft 130.

In this instance, though the rotor core 124 moves in up/down direction, and tends to fall off toward the opened top side of the rotor frame 122 by the rotation force following rotation of the rotor 120, since the upper projections 154 and the lower projections 154 hold an upper end and a lower end of the rotor core 124, the up/down movement, and fall off of the rotor core 124 is prevented.

In the meantime, as the upper insulator 116a is mounted on the top surface of the stator 110, current flow between the stator 110 and the power transmission unit 80 is prevented, and as the lower insulator 116b is mounted on an underside of the stator 110, covering the lower coil portion 114b with the coil receiver 117 of the lower insulator 116b, the stator 110 is not exposed to an outside.

Accordingly, as the stator 110 is not exposed to an outside in a state the power transmission unit 80 is mounted, accidents caused by negligence of safety, such as electric shock, is prevented, and since no external impact is applied to the coil 114 directly, damage to the coil 114 is prevented.

In the meantime, when the rotor 120 rotates by the interaction of the rotating magnetic field and the induction current, external air is drawn by the lower air holes 140 and the lower blades 142 of the rotor frame 122, blown toward lower portions of the stator 110 and the rotor core 124, to cool the lower portion of the motor 60, and discharged to an outside of the motor 60 through the side air holes 144.

Since the lower air holes 140 and the lower blades 142 are formed tilted in a range of 30° in a direction opposite to a rotation direction of the rotor in spinning of the washing machine, a flow rate of the lower air holes 140 and the lower blades 142 become maximum when the rotor frame 122 rotates in the spin direction, such that the cooling performance of the motor 60 becomes the maximum at the time of spinning when the heat generation of the motor 60 also becomes the maximum.

Since the side air holes 144 are positioned higher than the lower surface of the rotor frame 122, when compared to the related art, an air flow path between the lower air holes 140 and the side air holes 144 is moved up toward the stator 110 and the rotor core 124, to increase a contact area between the motor 60 and the external air.

Moreover, as external air is drawn by the upper blades 158 at the top bent portion 122c of the rotor frame 124 following rotation of the rotor 120, blown toward the upper portions of the stator 110 and the rotor core 124, and cools the upper portion of the motor 60.

Thus, as the external air is blown toward the upper portion and the lower portion of the motor 60 at the same time, and, at the same time with this, the cooling area of the lower portion of the motor 60 by the external air also increases, the cooling performance of the motor 60 increases, to improve efficiency of the motor 60, because the lower portion of the motor 60 is cooled by the lower air holes 140 and the lower blades 142, and the upper portion of the motor 60 is cooled by the upper blades 158.

In the meantime, the high centrifugal force coming from spinning of the rotor 120 distorts or deforms the rotor frame 122 into an ellipse.

In this instance, the plurality of beads 146 and the notches 148 reinforce the rotor frame 122 to prevent deformation of the rotor frame 122 even if thickness of the rotor frame 122 becomes thinner.

Even though a major portion of the force applied to the rotor frame 122 acts on the bushing securing portion 122b which is stepped, and has the plurality of fastening holes 160a, and 160b, and the rotating shaft 130 placed therein, the beads 146, extended from the side of the rotor frame 122 to a position where the first fastening holes 160a of the bushing securing portion 122b are, prevents deformation of the rotor frame 122 at the bushing securing portion 122b caused by stress concentration.

In the meantime, if a size of the gap 'G' between the stator 110 and the rotor 120 varies with positions, the magnetic attraction force between the stator 110 and the rotor core 124 coming from the non-uniform gap between the stator 110 and the rotor core 124 leads the rotor 120 and the stator 110 to collide with each other.

Accordingly, the manufacturer or the service man maintains, or adjusts the gap 'G' of the motor 60 constant through the plurality of gap verifying holes 156 in the rotor frame 122. That is, by verifying the gap 'G' through each of the plurality of gap verifying holes 156, the size of the gap 'G' is inspected, to detect defect of the gap 'G', and adjustment of the gap 'G' becomes easier.

However, even in a case the stator 110 and the rotor 120 are assembled, and adjusted such that the gap 'G' between the stator 110 and the rotor 120 uniform, the uniformity of the gap 'G' between the stator 110 and the rotor 120 is disturbed following driving of the motor 60, to cause the magnetic attraction force 'F' between the stator 110 and the rotor 120 coming from the non-uniform gap.

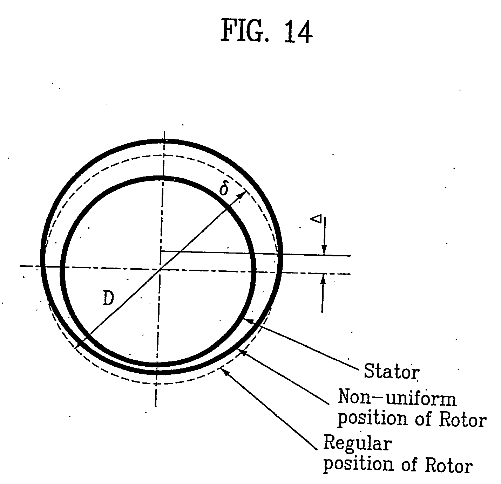

Referring to FIG. 14, the magnetic attraction force coming from the non-uniform gap is proportional to a gap surface area 'S', an amount of non-uniformity 'Δ', and a gap magnetic flux density 'B', and inversely proportional to a length of the gap 'L', and a number of parallel circuits 'P' as shown in an equation below.

$$F_{PULL} = \frac{1}{25} \times \left( \frac{B}{1000} \right)^2 \times \frac{\Delta}{\delta} [kg]$$

Where, S: a gap area [SQ.CM]$=(\pi D_s L_{eff})/C$,

B: an effective value of the gap magnetic flux density [GAUSS]

$$B = \frac{B_{peak}}{\sqrt{2}} \times 1.11,$$

$\delta$: a gap length [CM],
$D_s$: an inside diameter of a stator [CM],
$L_{eff}$: an amount of non-uniformity [CM],
C : Carter coefficient (about 1.2),
$P_{AR}$: an equivalent number of parallel circuits.

Therefore, if the coil 114 of the stator 110 is wired in 8 polar 4 parallel circuits at the core 112, a number of parallel circuit 'P' of the coil 114 increases, to reduce the magnetic attraction force 'F', too.

That is, as the four coils 114 are wired in parallel, a magnitude of the magnetic attraction force 'F' acting between the stator 110 and the rotor 120 is reduced to 1/4 compared to that of the related art, and following the reduction of the magnitude of the magnetic attraction force 'F', the rotational torque reduction and vibration occurrence of the rotor 120 are reduced, and a probability that the stator 110 and the rotor 120 interfere is also reduced.

The coil 114 includes a main parallel circuit and a sub-parallel circuit, wherein, if an AC power is applied to the main parallel circuit, the rotor 120 rotates in a regular direction, and, if an AC power is applied to the sub-parallel circuit, the rotor 120 rotates in a reverse direction.

## Claims

1. A motor (60) for a washing machine comprising:

   a stator (110) including a substantially annular core (112) having a stack of steel pieces, a coil (114) wound on the core (112) having an AC power applied thereto and an insulator (116) mounted on an outside surface of the core (112), the insulator (116) having one edge extended to cover the coil (114), and
   a rotor (120) on an outer side of the stator (110) mounted so as to be rotatable by interaction of electromagnetic force with respect to the stator (110).

2. The motor (60) as claimed in claim 1, wherein the insulator (116) includes;
   an upper insulator (116a) mounted on an upper surface of the core (112), and
   a lower insulator (116b) mounted on a lower surface of the core (112), having an outer edge extended to cover a coil portion at an outer edge of the lower surface of the core (112).

3. The motor (60) as claimed in claim 2, wherein the outer edge of the lower insulator (116b) is extended to the outer edge of the core (112), and is formed to surround a lower side of the coil (114) arranged on the lower surface of the core (112).

4. The motor (60) as claimed in claim 3, wherein the outer edge of the lower insulator (116b) has a downward concave parabola shape.

5. The motor (60) as claimed in claim 1, wherein a plurality of the coils are wound along a circumference of the core (112), and connected in parallel.

6. The motor (60) as claimed in claim 5, wherein the insulator (116) includes;
   an upper insulator (116a) mounted on an upper surface of the core (112), and
   a lower insulator (116b) mounted on a lower surface of the core (112), having an outer edge extended to cover a coil portion at an outer edge of the lower surface of the core (112).

7. The motor (60) as claimed in claim 6, wherein the outer edge of the lower insulator (116b) is extended to the outer edge of the core (112), and is formed to surround a lower side of the coil (114) arranged on the lower surface of the core (112).

8. The motor (60) as claimed in claim 7, wherein four coils are wound on the core (112) and connected in parallel to form four parallel circuits

9. The motor (60) as claimed in claim 8, wherein the coils are wired as a main parallel circuit for rotating the rotor (120) in a regular direction, and a sub-parallel circuit for rotating the rotor (120) in a reverse direction, and the sub-parallel circuit is arrange such that there is a fixed angle of phase difference between the sub-parallel circuit and the main parallel circuit.

10. The motor (60) as claimed in claim 1, wherein the rotor (120) includes;
a rotor frame (122) arranged to surround an lower surface and an outer side of the stator (110);
a rotor core (124) on an inside circumferential surface of the rotor frame (122) mounted so as to be rotatable by interaction of electromagnetic force with respect to the stator (110); and
rotor core (124) securing means at the rotor frame (122).

11. The motor (60) as claimed in claim 10, wherein the rotor frame (122) has a plurality of air holes formed in a radial pattern tilted by an angle with respect to a radial direction of the rotor frame (122).

12. The motor (60) as claimed in claim 10, wherein the rotor core (124) securing means includes;
a rotor core (124) securing portion for seating the rotor core (124) on an inside surface of the rotor frame (122), and
lower projections portion projected inwardly from a lower side of the rotor core (124) securing portion for supporting a lower end of the rotor core (124).

13. The motor (60) as claimed in claim 10, further comprising notches at a comer which connects a lower surface of the rotor frame (122) and a side surface of the rotor frame (122), for reinforcing strength.

14. The motor (60) as claimed in claim 10, further comprising beads formed in a lower surface of the rotor frame (122) extended in the radial direction of the rotor frame (122) to form a radial pattern.

15. The motor (60) as claimed in claim 10, further comprising a plurality of gap verifying holes in the lower surface of the rotor frame (122).

16. The motor (60) as claimed in claim 10, further comprising a plurality of air holes formed in a lower surface of the rotor frame (122) in a radial pattern tilted by an angle in a direction opposite to a rotation direction of the rotor frame (122) in spinning of the washing machine.

17. The motor (60) as claimed in claim 10, further comprising a plurality of blades projected upward from a upper direction of the rotor core (124), and along an upper surface of the rotor core (124) at regular intervals.

**Patentansprüche**

1. Motor (60) für eine Waschmaschine, der aufweist:

einen Stator (110), der einen im Wesentlichen ringförmigen Kern (112) mit einem Stapel an Stahlteilen, eine Spule (114), die auf den Kern (112) gewickelt ist, wobei eine Wechselstromleistung an sie angelegt wird, und einen Isolator (116), der auf eine Außenoberfläche des Kerns (112) montiert ist, umfasst, wobei der Isolator (116) einen Rand hat, der verlängert ist, um die Spule (114) zu bedecken, und
einen Rotor (120) auf einer Außenseite des Stators (110), der derart montiert ist, dass er durch die Einwirkung einer elektromagnetischen Kraft in Bezug auf den Stator (110) drehbar ist.

2. Motor (60) nach Anspruch 1, wobei der Isolator (116) umfasst:

einen oberen Isolator (116a), der auf einer oberen Oberfläche des Kerns (112) montiert ist, und einen unteren Isolator (116b), der auf einer unteren Oberfläche des Kerns (112) montiert ist, mit einem Außenrand, der verlängert ist, um einen Spulenabschnitt an einem Außenrand der unteren Oberfläche des Kerns (112) zu bedecken.

3. Motor (60) nach Anspruch 2, wobei der Außenrand des unteren Isolators (116b) zu dem Außenrand des Kerns (112) verlängert ist und derart ausgebildet ist, dass er eine Unterseite der Spule (114), die auf der unteren Oberfläche des Kerns (112) angeordnet ist, umgibt.

4. Motor (60) nach Anspruch 3, wobei der Außenrand des unteren Isolators (116b) eine abwärts konkave Parabelform hat.

5. Motor (60) nach Anspruch 1,
wobei mehrere Spulen entlang eines Umfangs des Kerns (112) gewickelt und parallel verbunden sind.

6. Motor (60) nach Anspruch 5, wobei der Isolator (116) umfasst:

einen oberen Isolator (116a), der auf einer oberen Oberfläche des Kerns (112) montiert ist, und einen unteren Isolator (116b), der auf einer unteren Oberfläche des Kerns (112) montiert ist, der einen Außenrand hat, der verlängert ist, um einen Spulenabschnitt an einem Außenrand der unteren Oberfläche des Kerns (112) zu bedecken.

7. Motor (60) nach Anspruch 6, wobei der Außenrand des unteren Isolators (116b) zu dem Außenrand des Kerns (112) verlängert ist und derart ausgebildet ist, dass er eine Unterseite der Spule (114), die auf der unteren Oberfläche des Kerns (112) angeordnet ist, umgibt.

**8.** Motor (60) nach Anspruch 7, wobei vier Spulen auf den Kern (112) gewickelt und parallel geschaltet sind, um vier parallele Schaltungen zu bilden.

**9.** Motor (60) nach Anspruch 8, wobei die Spulen als eine Hauptparallelschaltung zum Drehen des Rotors (120) in einer Normalrichtung, und eine Nebenparallelschaltung zum Drehen des Rotors (120) in einer Rückwärtsrichtung verdrahtet sind, und die Nebenparallelschaltung derart eingerichtet ist, dass es einen festen Phasendifferenzwinkel zwischen der Nebenparallelschaltung und der Hauptparallelschaltung gibt.

**10.** Motor (60) nach Anspruch 1, wobei der Rotor (120) umfasst:

einen Rotorrahmen (122), der eingerichtet ist, um eine untere Oberfläche und eine Außenseite des Stators (110) zu umgeben;
einen Rotorkern (124) auf einer Innenumfangsoberfläche des Rotorrahmens (122), der derart montiert ist, dass er durch die Einwirkung einer elektromagnetischen Kraft in Bezug auf den Stator (110) drehbar ist; und
eine Befestigungseinrichtung für den Rotorkern (124) an dem Rotorrahmen (122).

**11.** Motor (60) nach Anspruch 10, wobei der Rotorrahmen (122) mehrere Luftlöcher hat, die in einem radialen Muster ausgebildet sind, das um einen Winkel in Bezug auf eine Radialrichtung des Rotorrahmens (122) geneigt ist.

**12.** Motor (60) nach Anspruch 10, wobei die Befestigungseinrichtung für den Rotorkern (124) umfasst:

einen Befestigungsabschnitt für den Rotorkern (124) zum Auflagern des Rotorkerns (124) auf einer Innenoberfläche des Rotorrahmens (122), und
untere Vorsprünge, die von einer Unterseite des Befestigungsabschnitts für den Rotorkern (124) einwärts vorstehen, um ein unteres Ende des Rotorkerns (124) zu halten.

**13.** Motor (60) nach Anspruch 10, der ferner Kerben an einer Ecke aufweist, die eine untere Oberfläche des Rotorrahmens (122) und eine Seitenoberfläche des Rotor-rahmens (122) verbindet, um die Festigkeit zu verstärken.

**14.** Motor (60) nach Anspruch 10, der ferner in einer unteren Oberfläche des Rotorrahmens (122) ausgebildete Wulste aufweist, die sich in der Radialrichtung des Rotorrahmens (122) erstrecken, um ein radiales Muster zu bilden.

**15.** Motor (60) nach Anspruch 10, der ferner mehrere Spaltprüflöcher in der unteren Oberfläche des Rotorrahmens (122) aufweist.

**16.** Motor (60) nach Anspruch 10, der ferner mehrere Luftlöcher aufweist, die in einer unteren Oberfläche des Rotorrahmens (122) in einem radialen Muster ausgebildet sind, das beim Schleudern der Waschmaschine um einen Winkel in eine Richtung entgegengesetzt zu einer Drehrichtung des Rotorrahmens (122) geneigt ist.

**17.** Motor (60) nach Anspruch 10, der ferner mehrere Schaufeln aufweist, die von einer oberen Richtung des Rotorkerns (124) und entlang einer oberen Oberfläche des Rotorkerns (124) in regelmäßigen Abständen aufwärts vorstehen.

## Revendications

**1.** Moteur (60) pour une machine à laver comprenant :

un stator (110) comprenant un noyau sensiblement annulaire (112) ayant un empilement de pièces en acier, une bobine (114) enroulée sur le noyau (112) ayant un courant alternatif appliqué sur ce dernier et un isolant (116) monté sur une surface extérieure du noyau (112), l'isolant (116) ayant un bord étendu pour recouvrir la bobine (114), et
un rotor (120) sur un côté externe du stator (110) monté afin d'être entraîné en rotation par l'interaction de la force électromagnétique par rapport au stator (110).

**2.** Moteur (60) selon la revendication 1, dans lequel l'isolant (116) comprend :

un isolant supérieur (116a) monté sur une surface supérieure du noyau (112), et
un isolant inférieur (116b) monté sur une surface inférieure du noyau (112), ayant un bord externe étendu pour recouvrir une partie de bobine au niveau d'un bord externe de la surface inférieure du noyau (112).

**3.** Moteur (60) selon la revendication 2, dans lequel le bord externe de l'isolant inférieur (116b) est étendu vers le bord externe du noyau (112), et est formé pour entourer un côté inférieur de la bobine (114) agencée sur la surface inférieure du noyau (112).

**4.** Moteur (60) selon la revendication 3, dans lequel le bord externe de l'isolant inférieur (116b) a une forme de parabole concave vers le bas.

**5.** Moteur (60) selon la revendication 1, dans lequel une pluralité de bobines sont enroulées le long d'une circonférence du noyau (112) et raccordées en parallèle.

**6.** Moteur (60) selon la revendication 5, dans lequel l'isolant (116) comprend :

un isolant supérieur (116a) monté sur une surface supérieure du noyau (112), et
un isolant inférieur (116b) monté sur une surface inférieure du noyau (112), ayant un bord externe étendu pour recouvrir une partie de bobine au niveau d'un bord externe de la surface inférieure du noyau (112).

**7.** Moteur (60) selon la revendication 6, dans lequel le bord externe de l'isolant inférieur (116b) est étendu vers le bord externe du noyau (112) et est formé pour entourer un côté inférieur de la bobine (114) agencée sur la surface inférieure du noyau (112).

**8.** Moteur (60) selon la revendication 7, dans lequel quatre bobines sont enroulées sur le noyau (112) et raccordées en parallèle pour former quatre circuits parallèles.

**9.** Moteur (60) selon la revendication 8, dans lequel les bobines sont câblées en tant que circuit parallèle principal pour faire tourner le rotor (120) dans une direction ordinaire, et un circuit parallèle auxiliaire pour faire tourner le rotor (120) dans une direction opposée, le circuit parallèle auxiliaire est agencé de sorte qu'il y a un angle fixe de différence de phase entre le circuit parallèle auxiliaire et le circuit parallèle principal.

**10.** Moteur (60) selon la revendication 1, dans lequel le rotor (120) comprend :

un bâti de rotor (122) agencé pour entourer une surface inférieure et un côté externe du stator (110) ;
un noyau de rotor (124) sur une surface circonférentielle intérieure du bâti de rotor (122) monté afin de pouvoir tourner par l'interaction de la force électromagnétique par rapport au stator (110) ; et
des moyens de fixation de noyau de rotor (124) au niveau du bâti de rotor (122).

**11.** Moteur (60) selon la revendication 10, dans lequel le bâti de rotor (122) a une pluralité de trous d'air formés selon un modèle radial incliné selon un angle par rapport à une direction radiale du bâti de rotor (122).

**12.** Moteur (60) selon la revendication 10, dans lequel les moyens de fixation de noyau de rotor (124) comprennent :

une partie de fixation de noyau de rotor (124) pour installer le noyau de rotor (124) sur une surface intérieure du bâti de rotor (122), et
une partie de saillie inférieure faisant saillie vers l'intérieur à partir d'un côté inférieur de la partie de fixation de noyau de rotor (124) pour supporter une extrémité inférieure du noyau de rotor (124).

**13.** Moteur (60) selon la revendication 10, comprenant en outre des encoches au niveau d'un coin qui raccorde une surface inférieure du bâti de rotor (122) et une surface latérale du bâti de rotor (122) pour renforcer la résistance.

**14.** Moteur (60) selon la revendication 10, comprenant en outre des bourrelets formés dans une surface inférieure du bâti de rotor (122) étendu dans la direction radiale du bâti de rotor (122) afin de former un modèle radial.

**15.** Moteur (60) selon la revendication 10, comprenant en outre une pluralité de trous de vérification d'espace dans la surface inférieure du bâti de rotor (122).

**16.** Moteur (60) selon la revendication 10, comprenant en outre une pluralité de trous d'air formés dans une surface inférieure du bâti de rotor (122) dans un modèle radial incliné selon un angle dans une direction opposée à une direction de rotation du bâti de rotor (122) lors de la rotation de la machine à laver.

**17.** Moteur (60) selon la revendication 10, comprenant en outre une pluralité de pales faisant saillie vers le haut à partir d'une direction supérieure du noyau de rotor (124), et le long d'une surface supérieure du noyau de rotor (124) à intervalles réguliers.

# FIG. 1

# FIG. 2

# FIG. 3

——— MAIN
------- SUB

# FIG. 4

# FIG. 5

# FIG. 6

EP 1 759 046 B1

# FIG. 7

# FIG. 8

## FIG. 9

# FIG. 10

# FIG. 11

# FIG. 12

# FIG. 13

# FIG. 14

Stator

Non-uniform
position of Rotor

Regular
position of Rotor

**EP 1 759 046 B1**

**Patent documents cited in the description**

- KR 20040036197 A
- JP 2003079080 A
- KR 20030050734 A